# EUROPEAN PATENT APPLICATION

(11) **EP 4 660 794 A1**
(43) Date of publication of application: **10.12.2025**
(21) Application number: 24763082.5
(22) Date of filing: 26.02.2024
(51) Int. Cl.: G06F 9/445, G06F 9/54

(54) **INSTANCE STARTUP ACCELERATION METHOD AND RELATED APPARATUS**

(30) Priority: 28.02.2023 CN 202310224118; 21.02.2024 CN 202410194686
(71) Applicant: Huawei Technologies Co., Ltd., Shenzhen, Guangdong 518129 (CN)
(72) Inventor: ZHU, Weijie, Shenzhen, Guangdong 518129 (CN)
(74) Representative: Grünecker Patent- und Rechtsanwälte PartG mbB
(86) International application number: PCT/CN2024/078528
(87) International publication number: WO 2024/179400

(57) **Abstract**

An instance startup acceleration method is provided and is applied to startup acceleration of an instance like a process, a thread, or a hyper-thread. In the method, an instance snapshot created based on a started instance and an instance template created based on the instance snapshot are obtained, so that data generated during running of the started instance can be obtained, and a storage manner of the data in a memory can be learned. In this way, the data indicated by the instance snapshot is filled in a corresponding location in a memory of a current node based on the storage manner indicated by the instance template, to resume running of an instance based on the data stored in the memory. This avoids executing an instance initialization procedure (namely, a code compilation and execution procedure) with a long delay, improving an instance startup speed.

## Description

This application claims priorities to Chinese Patent Application No. 202310224118.1, filed with the China National Intellectual Property Administration on February 28, 2023 and entitled "INSTANCE STARTUP ACCELERATION METHOD AND RELATED APPARATUS", and to Chinese Patent Application No. 202410194686.6, filed with the China National Intellectual Property Administration on February 21, 2024 and entitled "INSTANCE STARTUP ACCELERATION METHOD AND RELATED APPARATUS", both of which are incorporated herein by reference in their entireties.

### TECHNICAL FIELD

This application relates to the field of computer technologies, and in particular, to an instance startup acceleration method and a related apparatus.

### BACKGROUND

A microservice is an architecture and an organization method for developing software, so that the software can include a plurality of small independent services. These services can be managed by small independent teams. The microservice architecture makes applications easier to scale and faster to develop, thereby accelerating innovation and shortening time to market for new functions of the applications.

Currently, microservices are deployed in a multi-instance manner to support high-concurrency user access. In addition, these services in the microservice architecture are generally run on a cloud, to take advantage of dynamic scalability of cloud resources.

However, for most microservices, for example, a Java microservice, the microservice usually uses a large quantity of components and a startup procedure is complex. Consequently, an instance startup delay in the microservice is long, which greatly limits autoscaling when the microservice is deployed on the cloud.

### SUMMARY

This application provides an instance startup acceleration method, to accelerate an instance startup procedure and reduce an instance startup delay.

A first aspect of this application provides an instance startup acceleration method, which may be applied to startup acceleration of an instance like a process, a thread, or a hyper-thread. In this method, an instance snapshot and an instance template are first obtained. The instance snapshot is obtained based on a started first instance, and the instance snapshot indicates data generated by the first instance during running (including all data generated by the first instance in a startup phase). Specifically, the instance snapshot records a memory status during running of the first instance (namely, data corresponding to the first instance in the memory in an instantaneous state), that is, the instance snapshot records data on which running of the first instance depends. The instance template may be created based on the instance snapshot, and indicates a storage manner of the data in a memory during startup of the first instance. In other words, the instance template describes how the data generated by the first instance during running is specifically stored in the memory.

Then, the data indicated by the instance snapshot is stored in a first memory based on the instance template, so that the data required in an instance startup procedure is filled in the memory.

Finally, after the data indicated by the instance snapshot is stored in the first memory in a specified manner, it indicates that all data required for starting a second instance is ready. Therefore, running of the second instance may be resumed based on the data stored in the first memory.

In this solution, the instance snapshot created based on the started instance and the instance template created based on the instance snapshot are obtained, so that the data generated during running of the started instance can be obtained, and the storage manner of the data in the memory can be learned. In this way, the data indicated by the instance snapshot is filled in a corresponding location in a memory of a current node based on the storage manner indicated by the instance template, to resume running of the instance based on the data stored in the memory. This avoids performing an instance initialization procedure (namely, a code compilation and execution procedure) with a long delay, improving an instance startup speed.

In a possible implementation, the first memory is a shared memory, and different instances on a same electronic device may share the data in the first memory. Therefore, the data stored in the first memory may be used to resume one or more instances of a same type. A plurality of instances of a same type are instances resumed based on same data. For example, when the instance is a process, a plurality of processes of a same type may be a plurality of different processes started based on same executable code in the first memory. In this way, when a plurality of instances of a same type are started on a same electronic device, the instances can be quickly started by using data shared in a shared memory, to avoid performing a procedure of storing the data indicated by the instance snapshot in the memory again. This improves the instance startup speed.

In a possible implementation, the instance template further indicates a running status of the first instance at a creation time point of the instance snapshot, namely, a specific running status of the first instance when the instance snapshot is created. In this way, when running of the second instance is resumed based on the data stored in the first memory, based on the running status indicated by the instance template, an instruction in a first address in the first memory may be jumped to and run. The instruction in the first address belongs to the data stored in the first memory, and the instruction in the first address corresponds to an instruction executed by the first instance in the running status. In this way, when the instruction in the first address of the first memory is run, a running status of the second instance is the same as the running status of the first instance at the creation time point of the instance snapshot. For example, during actual application, a "jump" instruction of an assembler is called based on an address space pointer that is of the first instance and that is indicated by a second type of data in the instance template, to jump to the status of the first instance at the creation time point of the instance snapshot, to resume running of the second instance.

In this solution, the running status of the first instance at the creation time point of the instance snapshot is indicated by the instance template, so that after data required for instance running is restored to the first memory, a corresponding instance running status can be jumped back to, to resume running of the second instance. In this way, a complex procedure (for example, the service initialization phase described above) that needs to be performed during initial startup of the instance does not need to be performed, thereby effectively improving the instance startup speed.

In a possible implementation, the instance template specifically indicates a size of a memory region occupied by the data indicated by the instance snapshot, namely, a size of a memory region that needs to be occupied by the data generated by the first instance. In this way, when the data indicated by the instance snapshot is stored in the first memory based on the instance template, a first region that is in the first memory and that is used to store the data may be first determined based on the size of the memory region, and then the data indicated by the instance snapshot is stored in the first region in the first memory. A size of the first region is consistent with the size of the memory region indicated by the instance template, that is, the first region is greater than or equal to the size of the memory region indicated by the instance template.

In this solution, a memory region whose size meets a requirement is determined in the first memory based on an indication of the instance template, to store the data indicated by the instance snapshot, so that it can be ensured that the data required for running of the second instance can be stored in a continuous memory region, to prevent memory contamination from affecting normal running of the second instance.

In a possible implementation, the instance template specifically further indicates a data structure of the data indicated by the instance snapshot. In this way, when the data indicated by the instance snapshot is stored in the first memory based on the instance template, the instance snapshot may be first parsed based on the data structure indicated by the instance template, to obtain the data indicated by the instance snapshot.

For example, when the instance snapshot is obtained by serializing the data generated by the first instance, the instance snapshot may be deserialized based on the data structure indicated by the instance template, to restore the data actually indicated by the instance snapshot.

In a possible implementation, the instance template specifically indicates one or more of the following: the running status of the first instance at the creation time point of the instance snapshot, the size of the memory region occupied by the data indicated by the instance snapshot, and the data structure of the data indicated by the instance snapshot.

In a possible implementation, a running environment of the second instance is a virtual machine, a container, or a container group.

In a possible implementation, the second instance is used to access a backend as a service (Backend as a Service, BaaS) through a proxy component, and the BaaS is used to provide a data service for running of the second instance, for example, services such as cloud data/file storage, account management, message push, and social media integration. In addition, in a procedure of resuming running of the second instance, the proxy component maintains a connection to the BaaS. The proxy component is pre-established, and the proxy component is used to maintain the connection to the BaaS, to act as a proxy for an access behavior of the second instance for the BaaS at any time.

In a possible implementation, the connection between the proxy component and the BaaS may be obtained. After running of the second instance is resumed, the connection between the proxy component and the BaaS is returned to the second instance, so that the second instance accesses the BaaS by accessing the proxy component.

In this solution, the pre-established proxy component is used to maintain the connection to the BaaS, and the proxy component is used to act as the proxy for the access behavior of the instance for the BaaS, so that the instance does not need to re-establish the connection to the BaaS in a startup procedure. This reduces time consumed for establishing the connection and improves the instance startup speed.

In a possible implementation, the instance snapshot and the instance template are obtained from a running node of the first instance through a network. In other words, the running node of the first instance pre-creates the instance snapshot and the instance template based on the running first instance, and then transmits the instance snapshot and the instance template to a running node of the second instance, to resume running of the second instance based on the instance snapshot and the instance template.

In a possible implementation, the first instance and the second instance are processes, threads, or hyper-threads.

In a possible implementation, the first instance and the second instance are instances in a microservice architecture. In the microservice architecture, an application includes many loosely coupled small services that can be independently deployed, and the first instance and the second instance may be instances in one of the services, and can implement a group of independent features or functions.

A second aspect of this application provides an instance startup acceleration apparatus, including: an obtaining module, configured to obtain an instance snapshot and an instance template, where the instance snapshot is obtained based on a started first instance, the instance snapshot indicates data generated by the first instance during running, and the instance template indicates a storage manner of the data in a memory during startup of the first instance; a processing module, configured to store, in a first memory based on the instance template, the data indicated by the instance snapshot; and the processing module, further configured to resume running of a second instance based on the data stored in the first memory.

In a possible implementation, the first memory is a shared memory, and the data stored in the first memory is used to resume one or more instances of a same type.

In a possible implementation, the instance template further indicates a running status of the first instance at a creation time point of the instance snapshot. The processing module is further configured to: based on the running status indicated by the instance template, jump to an instruction in a first address of the first memory and run the instruction, where when the instruction is run, a running status of the second instance is the same as the running status of the first instance at the creation time point of the instance snapshot.

In a possible implementation, the instance template specifically indicates a size of a memory region occupied by data indicated by the instance snapshot; and the processing module is further configured to determine, based on the size of the memory region, a first region that is in the first memory and that is used to store data; and store, in the first region in the first memory, the data indicated by the instance snapshot.

In a possible implementation, the instance template specifically further indicates a data structure of the data indicated by the instance snapshot. The processing module is further configured to parse the instance snapshot based on the data structure indicated by the instance template, to obtain the data indicated by the instance snapshot.

In a possible implementation, the instance template specifically indicates one or more of the following: the running status of the first instance at the creation time point of the instance snapshot, the size of the memory region occupied by the data indicated by the instance snapshot, and the data structure of the data indicated by the instance snapshot.

In a possible implementation, the second instance is used to access a backend as a service BaaS through a proxy component, and the BaaS is used to provide a data service for running of the second instance. In a procedure of resuming running of the second instance, the proxy component maintains a connection to the BaaS.

In a possible implementation, the obtaining module is further configured to obtain the connection between the proxy component and the BaaS; and the processing module is further configured to: after running of the second instance is resumed, return the connection to the second instance.

In a possible implementation, the instance snapshot and the instance template are obtained from a running node of the first instance through a network.

In a possible implementation, the first instance and the second instance are processes, threads, or hyper-threads.

In a possible implementation, the first instance and the second instance are instances in a microservice architecture.

A third aspect of this application provides an instance startup acceleration apparatus. The instance startup acceleration apparatus includes a memory and a processor. The memory stores code, the processor is configured to execute the code, and when the code is executed, the instance startup acceleration apparatus performs the method according to any implementation of the first aspect or the second aspect.

A fourth aspect of this application provides a computer-readable storage medium. The computer-readable storage medium stores a computer program. When the computer program is run on a computer, the computer is enabled to perform the method according to any implementation of the first aspect or the second aspect.

A fifth aspect of this application provides a computer program product. When the computer program product runs on a computer, the computer is enabled to perform the method according to any implementation of the first aspect or the second aspect.

A sixth aspect of this application provides a chip, including one or more processors. Some or all of the processors are configured to read and execute a computer program stored in a memory, to perform the method according to any implementation of the first aspect or the second aspect.

Optionally, the chip includes a memory, and the memory and the processor are connected to the memory through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface. The method provided in embodiments of this application may be implemented by one chip, or may be cooperatively implemented by a plurality of chips.

For technical effect brought by any one of the design manners of the second aspect to the sixth aspect, refer to technical effect brought by different implementations of the first aspect. Details are not described herein again.

### BRIEF DESCRIPTION OF DRAWINGS

FIG. 1 is a diagram of a startup delay of a Java microservice;
FIG. 2 is a diagram of a structure of an electronic device 101 according to an embodiment of this application;
FIG. 3 is a schematic flowchart of an instance startup acceleration method according to an embodiment of this application;
FIG. 4 is a schematic flowchart of accelerating starting a process based on a process snapshot according to an embodiment of this application;
FIG. 5 is a diagram of a procedure of creating a plurality of processes on a node 2 according to an embodiment of this application;
FIG. 6 is a diagram of comparison between procedures of starting processes on different nodes according to an embodiment of this application;
FIG. 7 is a diagram of comparison between procedures of starting processes in different manners according to an embodiment of this application;
FIG. 8 is a diagram of a structure of an instance startup acceleration apparatus according to an embodiment of this application;
FIG. 9 is a diagram of a structure of an execution device according to an embodiment of this application; and
FIG. 10 is a diagram of a structure of a computer-readable storage medium according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a procedure, method, system, product, or device that includes a list of steps or units is not necessarily limited to those expressly listed steps or units, but may include other steps or units not expressly listed or inherent to such a procedure, method, product, or device.

For ease of understanding, the following first describes some technical terms used in embodiments of this application.

### (1) Microservice

A microservice is a software development technology, a variant of a service-oriented structure architecture style. It advocates that a single application is divided into a group of small services. The services coordinate and cooperate with each other to provide ultimate value for users. Each service is run in an independent process. The services communicate with each other by using a lightweight communication mechanism. Each service is built based on a specific service and can be independently deployed in a production environment, a quasi-production environment, or the like.

Simply speaking, the microservice is a cloud-native architecture that enables a single application to include many loosely coupled components or services that can be independently deployed. In other words, a single application is divided into smaller, interrelated, and independent services. One service usually implements a group of independent features or functions, including service logic and an adapter of the service. Association between the microservices is implemented by exposing APIs. These independent microservices do not need to be deployed on a same virtual machine, system, or application server.

### (2) Java

Java is a programming language specifically designed for use in a distributed environment of the Internet. Java has a "form and feeling" similar to C++, but it is easier to use than the C++ language, and fully adopts an "object-oriented" manner in programming. Applications written in Java can be run either on a single computer or on servers and clients distributed in a network.

A Java microservice is a microservice compiled in Java.

### (3) Instance

An instance is an entity during running of an application. In this embodiment, the instance may be, for example, a process, a thread, or a hyper-thread.

### (4) Process (Process)

A process is a running activity performed regarding a dataset by a program in a computer, is a base unit for performing resource allocation by a system, and is a structural basis of an operating system. In an early process-oriented computer architecture, a process is a basic execution entity of a program. In a modern thread-oriented computer architecture, a process is a container for threads. The program is a description of an instruction, data, and an organizational form thereof. The process is a program entity.

### (5) Thread (thread)

A thread is a minimum unit that an operating system can compute and schedule. The thread is usually included in the process and is an actual operating unit of the process. One thread is one control flow in a single order in a process. One process may have a plurality of concurrent threads, and the threads execute different tasks in parallel.

### (6) Hyper-thread

A hyper-thread simulates two logical cores in a multi-thread processor into two physical chips, so that a single processor can use thread-level parallel computing and is compatible with multi-thread operating systems and software. Simply speaking, the hyper-thread refers to two logical threads that are processed by a single processor at the same time.

### (7) Snapshot (Snapshot)

A snapshot is a usable copy for a specified dataset, where the copy includes an image of corresponding data at a time point (a time point at which the copy begins). Specifically, the snapshot may be a duplicate of data represented by the snapshot, or a replica of the data.

### (8) Instance snapshot

An instance snapshot is an instantaneous state of content contained in a started instance. Specifically, the instance snapshot includes all data generated during running of the started instance.

### (9) Shared memory (Shared Memory)

A shared memory is a large-capacity memory that can be accessed by different central processing units (central processing unit, CPU) in a multiprocessor computer system.

### (10) Copy-on-write (Copy-on-write, COW)

Copy-on-write is an optimization strategy in the field of computer program designs. A core idea of copy-on-write is that if a plurality of callers (callers) request a same resource (for example, data stored in a memory or a disk) at the same time, the callers jointly obtain a same pointer pointing to the same resource. It is not until a caller attempts to modify content of the resource that a system actually makes a private copy for the caller, and an original resource viewed by other callers remains unchanged. This procedure is invisible to other callers.

An advantage of copy-on-write is that if the caller does not modify the resource, no private copy is created. Therefore, the plurality of callers can share the same resource only when the callers read the resource.

### (11) Virtual machine

A virtual machine is a highly isolated software container that can run an operating system and an application of the virtual machine as if it were a physical computer. The virtual machine behaves exactly like the physical computer, and includes a virtual CPU, an internal storage, and a network interface card of the virtual machine. The virtual machine includes software and does not include any hardware component.

### (12) Container

A container is an independent running environment, similar to a virtual machine. The container isolates applications and association of the applications, to efficiently use computer resources, and improve energy efficiency and cost efficiency. Main differences between the container and the virtual machine lie in a location of a virtualization layer and a manner of using an operating system resource.

### (13) Pod

A pod is essentially a minimum scheduling unit in Kubernetes and is an environment that includes resources such as a container, storage space, and a network port. Generally, a node (node) is a host where the pod runs. The node can be a physical machine or a virtual machine. A plurality of pods can run on a node, and each pod can include a plurality of containers. Therefore, the pod is also referred to as a container group.

Kubernetes is used to manage containerized applications on a plurality of hosts on a cloud platform. Kubernetes aims to make containerized application deployment simple and efficient.

### (14) Backend as a service (Backend as a Service, BaaS)

A BaaS provides mobile application developers with integrated cloud backend border services. Specifically, the BaaS is a new type of cloud service, aiming to provide backend cloud services for applications, including cloud data/file storage, account management, message push, and social media integration.

### (15) Remote procedure call (Remote Procedure Call, RPC)

An RPC is a protocol that requests services from a remote computer over a network without knowing an underlying network technology. Specifically, for a server A and a server B, an application is deployed on the server A. If the application needs to call a function/method provided by an application on the server B, the function/method cannot be directly invoked because the function/method is not in same memory space as the application. Therefore, a network needs to be used to express calling semantics and convey calling data. The RPC provides a manner to obtain services from a remote server over the network.

### (16) Remote direct data access (Remote Direct Memory Access, RDMA)

An RDMA technology is generated to resolve a delay of data processing at a server end during network transmission. RDMA transfers data directly to a storage region of a computer over a network, and quickly moves data from one system to a remote system memory without affecting an operating system. In this way, few processing of the computer is required. This eliminates overheads of external memory copying and context switching, to free up memory bandwidth and a CPU cycle to improve application system performance.

### (17) Data structure

A data structure is a way in which a computer stores and organizes data. Specifically, the data structure is a set of data elements that have one or more specific relationships with each other. In general, a carefully selected data structure can bring high operating or storage efficiency.

### (18) Metadata

Metadata is also referred to as intermediary data or relay data, metadata is data about data (data about data), is mainly information describing properties (properties) of data, and is used to support functions such as storage location indication, historical data, resource searching, and file recording.

Currently, for most microservices, for example, a Java microservice, the microservice usually uses a large quantity of components and a startup procedure is complex. Consequently, an instance startup delay in the microservice is long, which greatly limits autoscaling when the microservice is deployed on the cloud.

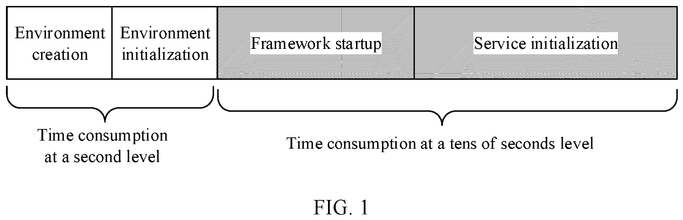

For example, FIG. 1 is a diagram of a startup delay of a Java microservice. As shown in FIG. 1, the startup delay of the Java microservice is decomposed, so that time consumption distribution of the Java microservice in each phase of a startup procedure can be learned. Specifically, in a case of cold start of the Java microservice, startup time consumption is divided into two parts: time consumed by a platform side and time consumed by a service side.

The time consumed by the platform side mainly includes time spent on preparation work such as execution environment creation (for example, container startup) and execution environment initialization (such as code package download and deployment). In this phase, a response is at a second level at most, which accounts for less than 5% of overall time consumption of the cold start. Generally, the platform side also supports some optimization methods to further reduce the time consumption to milliseconds.

The time consumed by the service side includes time spent on actions such as microservice framework startup and service initialization (for example, service data initialization). This phase usually takes long time. In the example shown in FIG. 1, time consumption of the microservice framework startup accounts for about 30%, and time consumption of the service initialization accounts for about 65%. Therefore, actions executed in this phase are the core of slow Java microservice startup.

The Java microservice is used as an example. The Java microservice is started slowly on the service side due to the following reasons: 1. The Java microservice has a complex framework. As an enterprise-level framework, the Java microservice has a large amount of configurable and initialized logic to support a wide range of application requirements. Complex design patterns are used to support this flexibility. In many cases, a common Java microservice may depend on a large quantity of class files. 2. In addition, when the Java microservice loads classes during startup, overheads of searching for and verifying the classes increase with application complexity. In addition, when the Java microservice is just started, just in time (Just In Time, JIT) optimization is usually not triggered, and hotspot bytecode still needs to be interpreted and executed. Therefore, in most cases, the interpretation and the execution are suspended, which affects a startup speed of the Java microservice.

In conclusion, when the Java microservice is a delay-sensitive microservice deployed on a cloud, user experience may deteriorate because the startup delay is excessively long when the Java microservice undergoes a cold start in a case of burst traffic.

In view of this, an embodiment of this application provides an instance startup acceleration method. An instance snapshot created based on a started instance and an instance template created based on the instance snapshot are obtained, so that data generated during running of the started instance can be obtained, and a storage manner of the data in a memory can be learned. In this way, data indicated by the instance snapshot is filled in a corresponding location in a memory of a current node based on the storage manner indicated by the instance template, to resume running of an instance based on the data stored in the memory. This avoids performing an instance initialization procedure (namely, a code compilation and execution procedure) with a long delay, improving an instance startup speed.

The instance acceleration startup method provided in embodiments of this application may be applied to an electronic device. For example, the electronic device may be a physical device, for example, a server, a mobile phone (mobile phone), a personal computer (personal computer, PC), a notebook computer, a tablet computer, a smart television, a mobile internet device (mobile internet device, MID), a wearable device, a virtual reality (virtual reality, VR) device, an augmented reality (AR) device, a wireless communication apparatus in industrial control, a wireless communication apparatus in a smart grid, a wireless communication apparatus in transportation safety, a wireless communication apparatus in a smart city (smart city), a wireless communication apparatus in a smart home (smart home), a router, a switch, a firewall, or a hub. In addition, the electronic device may also be a virtualized device like a virtual machine.

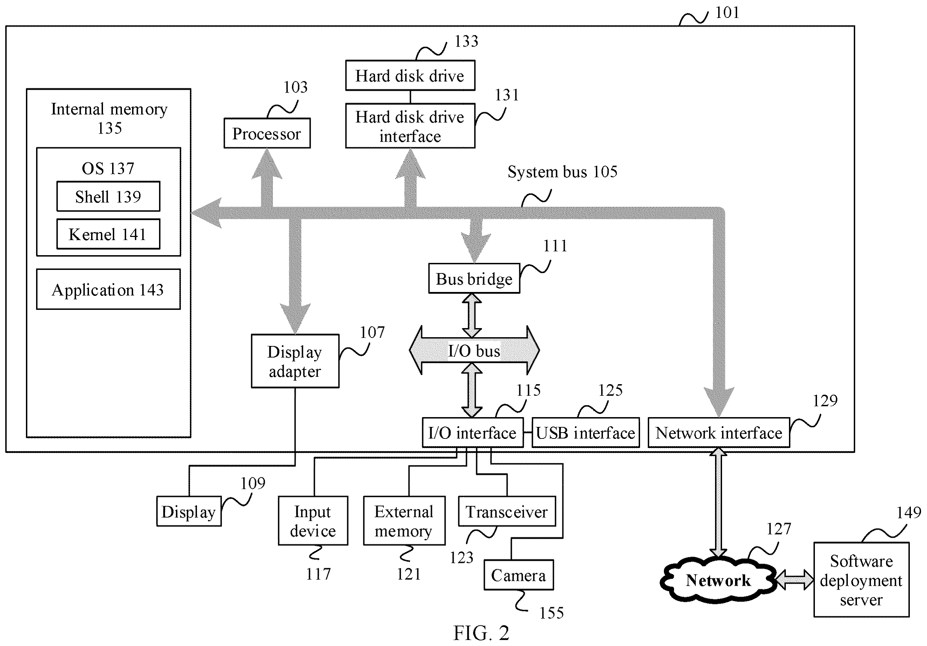

FIG. 2 is a diagram of a structure of an electronic device 101 according to an embodiment of this application. As shown in FIG. 2, the electronic device 101 includes a processor 103, and the processor 103 is coupled to a system bus 105. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB interface 125. Optionally, an interface connected to the I/O interface 115 may be a USB interface.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus like an ASIC.

The electronic device 101 may communicate with a software deployment server 149 through a network interface 129. For example, the network interface 129 is a hardware network interface, for example, a network interface card. A network 127 may be an external network like the internet, or an internal network like the Ethernet or a virtual private network (virtual private network, VPN). Optionally, the network 127 may alternatively be a wireless network, for example, a Wi-Fi network, a cellular network, or the like.

The hard disk drive interface 131 is coupled to the system bus 105. A hardware drive interface is connected to the hard disk drive 133. An internal memory 135 is coupled to the system bus 105. Data running in the internal memory 135 may include an operating system (OS) 137, an application 143, and a scheduling table of the electronic device 101.

The operating system includes a shell 139 and a kernel (kernel) 141. The shell 139 is an interface between a user and the kernel of the operating system. The shell is the outermost layer of the operating system. The shell manages interaction between the user and the operating system: waiting for an input from the user, interpreting the input from the user to the operating system, and processing various output results of the operating system.

The kernel 141 includes parts that are in the operating system and that are used to manage a memory, a file, a peripheral, and a system resource. The kernel 141 directly interacts with hardware. The kernel of the operating system usually runs a process, provides inter-process communication, and provides functions such as CPU time slice management, interruption, memory management, and I/O management.

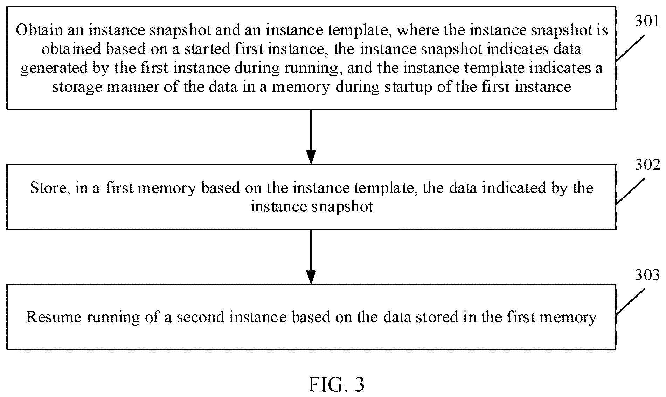

The foregoing describes a scenario to which the method provided in embodiments of this application is applied and an execution device. The following describes a specific execution procedure of the method provided in embodiments of this application. FIG. 3 is a schematic flowchart of an instance startup acceleration method according to an embodiment of this application. As shown in FIG. 3, the instance startup acceleration method includes the following steps 301 to 303.

Step 301: Obtain an instance snapshot and an instance template, where the instance snapshot is obtained based on a started first instance, the instance snapshot indicates data generated by the first instance during running, and the instance template indicates a storage manner of the data in a memory during startup of the first instance.

In this embodiment, when the instance needs to be started, an electronic device may obtain, in advance, the instance snapshot and the instance template that are used to accelerate instance startup. The instance snapshot is created after the first instance is started, and the instance snapshot is essentially an instantaneous state of all content included in the started first instance. Therefore, the instance snapshot actually records all data generated by the first instance during running (including all data generated by the first instance in a startup phase). Essentially, the instance snapshot records a memory status during running of the first instance (namely, data corresponding to the first instance in the memory in the instantaneous state), that is, the instance snapshot records data on which running of the first instance depends. For example, the instance snapshot records a file, a socket, and a signal that are used by the first instance during running, and information about another instance or function that needs to be called by the first instance during running.

For example, the instance snapshot may include a plurality of image files, and each image file indicates unique data generated by the first instance during running. In addition, different image files may indicate different types of data. For example, the plurality of image files in the instance snapshot may indicate the following data: 1: a file opened by the first instance; 2: register information of the first instance; 3: a pipe symbol of the first instance; 4: a memory address used by the first instance; 5: a memory page used by the first instance; and 6: information about a process and a subprocess that are scheduled by the first instance. In addition to the foregoing data, the plurality of image files in the instance snapshot may further indicate other data based on an actual running status of the instance. This is not specifically limited in this embodiment.

The first instance is an entity in a running procedure of an application, for example, may be a process, a thread, or a hyper-thread. A specific structure form of the first instance is not limited in this embodiment.

The instance template may be created based on the instance snapshot. Specifically, the instance template may be understood as metadata of the instance snapshot, and describes the storage manner of the data indicated by the instance snapshot in the memory. In other words, the instance template describes how the data generated by the first instance during running is specifically stored in the memory.

In a possible example, the instance snapshot and the instance template may be pre-stored in storage space of the electronic device, and the electronic device obtains the instance snapshot from local storage space. For example, after the electronic device starts the first instance, the electronic device may create the instance snapshot based on all the data generated by the first instance during running, and store the instance snapshot in predefined storage space. In this way, even after the first instance is closed, the electronic device can still obtain, from the storage space, the instance snapshot obtained based on the first instance that is started in advance.

In another possible example, the electronic device may alternatively obtain the instance snapshot and the instance template from another place through a network. For example, the electronic device may obtain the instance snapshot and the instance template from another device (for example, a physical machine device or a virtual machine) through the network. The instance snapshot is created by another device based on content of the first instance after the another device starts the first instance. The instance template may be created by the another device based on the instance snapshot after the another device creates the instance snapshot.

For example, when a plurality of servers provide cloud microservices, the electronic device may be, for example, a server 1. When an instance needs to be started, the server 1 may obtain an instance snapshot and an instance template from a server 2 through a network, so that the server 1 accelerates instance startup based on the instance snapshot and the instance template. The instance snapshot and the instance template may be created and stored by the server 2 after the server 2 starts the first instance.

Optionally, when the electronic device obtains the instance snapshot through the network, the electronic device may specifically obtain the instance snapshot from a shared data storage system through the network. The shared data storage system may be a data storage system shared by a plurality of devices. The plurality of devices sharing the data storage system can quickly access data in the data storage system through the network, for example, quickly read data in the data storage system through RDMA.

In other words, the shared data storage system is used to store the instance snapshot and the instance template, so that the electronic device can quickly obtain the instance snapshot from another device during cold start of the instance, and a transmission delay of the instance snapshot is reduced, thereby improving a speed of subsequently starting the instance by the electronic device.

Step 302: Store, in a first memory based on the instance template, the data indicated by the instance snapshot.

In this embodiment, because the instance snapshot records the data generated during running of the first instance, the data generated during running of the first instance may be restored based on the instance snapshot. In addition, because the instance template indicates how the data generated during running of the first instance is stored in the memory, data obtained by restoring the instance snapshot may be stored in a memory of a current node based on the memory storage manner indicated by the instance template. In this way, the data required in the instance startup procedure is filled in the memory.

Step 303: Resume running of a second instance based on the data stored in the first memory.

After the data indicated by the instance snapshot is stored in the first memory in a specified manner, it indicates that all data required for starting the second instance by the electronic device is ready. In this case, the electronic device may start the second instance based on the data stored in the memory. In a startup procedure of the second instance, the second instance may specifically run in a virtual machine, a container, or a pod (Pod), in other words, a specific running environment of the second instance is a virtual machine, a container, or a pod.

In this embodiment, the first instance and the second instance are instances of a same type (for example, both the first instance and the second instance are processes, threads, or hyper-threads), and can provide a same instance service. A difference lies in that the first instance and the second instance run in different running environments. For example, the first instance and the second instance run on different physical machines, different virtual machines, or different containers or pods.

In this solution, the instance snapshot created based on the started instance and the instance template created based on the instance snapshot are obtained, so that the data generated during running of the started instance can be obtained, and the storage manner of the data in the memory can be learned. In this way, the data indicated by the instance snapshot is filled in a corresponding location in a memory of a current node based on the storage manner indicated by the instance template, to resume running of the instance based on the data stored in the memory. This avoids performing an instance initialization procedure (namely, a code compilation and execution procedure) with a long delay, improving an instance startup speed.

Optionally, the first instance and the second instance may be instances in a microservice architecture. In the microservice architecture, an application includes many loosely coupled small services that can be independently deployed, and the first instance and the second instance may be instances in one of the services, and can implement a group of independent features or functions.

The foregoing describes a procedure in which the electronic device quickly starts the instance based on the instance snapshot. However, in some scenarios, a plurality of instances of a same type may need to be started on a same electronic device (for example, a same physical machine or virtual machine), to support a high-concurrency user access requirement. In this case, to ensure that the instances of the same type run independently, different instances need to be isolated by using containers or pods. Based on this, in a scenario in which the plurality of same instances are started on the same physical machine or virtual machine, this embodiment further provides an implementation of further accelerating a subsequent instance startup procedure.

For example, in step 302, the first memory may be specifically a shared memory, and the data stored in the first memory can be used to resume one or more instances of a same type. The shared memory used as the first memory is a memory in the electronic device, and different instances running on the electronic device can share the data in the shared memory.

In this way, when the plurality of instances of the same type are started on the same electronic device, the instances can be quickly started by using the data shared in the shared memory, to avoid performing a procedure of storing the data indicated by the instance snapshot in the memory again. This improves the instance startup speed.

For ease of understanding, the following describes, with reference to specific content indicated by the instance snapshot and the instance template, a procedure of quickly resuming running of the second instance.

First, for the obtained instance snapshot, the instance snapshot may be specifically a plurality of image files obtained by serializing, according to a specific specification, the data generated by the first instance during running, and each image file indicates specific data generated by the first instance during running. For example, the plurality of image files in the instance snapshot may indicate the following data: 1: a file opened by the first instance; 2: register information of the first instance; 3: a pipe symbol of the first instance; 4: a memory address used by the first instance; 5: a memory page used by the first instance; and 6: information about a process and a subprocess that are scheduled by the first instance.

For the instance template, the instance template is specifically used to describe an attribute of the data indicated by the instance snapshot, so that the electronic device can store the data indicated by the instance snapshot in a memory of the current electronic device in a manner in which the data is stored during running of the first instance, thereby ensuring that the data required for starting the instance can be correctly stored in the memory.

Specifically, the data in the instance template may include three types of data. A first type of data is used to describe a data structure of the data indicated by the instance snapshot. A second type of data is used to describe a running status of the first instance at a creation time point of the instance snapshot. A third type of data is used to describe a storage status of the data indicated by the instance snapshot in the memory. The following separately describes specific content included in each type of data.

The first type of data is actually the data structure that describes the data, and may specifically include but is not limited to the following a plurality of parts of content: 1: a data structure of metadata information of the plurality of image files corresponding to the instance snapshot; 2: a data structure description of a file used by the first instance; 3: a data structure description of register information used by the first instance; 4: a data structure description of process address space used by the first instance; 5: a data structure of memory page information of the first instance; and 6: a data structure of the first instance and subprocess information.

The second type of data indicates an actual running status of the first instance at the creation time point of the instance snapshot. The second type of data may specifically include but is not limited to the following a plurality of parts of content: 1: frozen time of the first instance; 2: an address space pointer of the first instance (namely, a specific location to which the first instance is executed); 3: a quantity of memory pages on which a memory copy operation can be performed in the first instance based on a copy-on-write manner; 4: a memory page cache size of the first instance; and 5: whether the memory page of the first instance is lazy loaded.

The third type of data indicates the storage status of the data indicated by the instance snapshot in the memory. The third type of data may specifically include but is not limited to the following a plurality of parts of content: 1: information about a size of the memory page used by the first instance, namely, a size of a memory region occupied by data required for running of the first instance. The information about the size of the memory page used by the first instance may be described by using a page mapping file of the first instance. The page mapping file includes virtual regions that correspond to the first instance and that need to be filled with data, that is, records a mapping status from a private virtual page of the first instance to a physical page. Therefore, the information about the size of the memory page actually used by the first instance can be determined. 2: Actual data that needs to be stored in the memory page and that is of the instance snapshot, that is, data that needs to be stored in the memory and that is indicated by the instance snapshot.

Step 302 may specifically include the following steps 3021 to 3023.

Step 3021: Parse, based on the data structure indicated by the instance template, the instance snapshot to obtain the data indicated by the instance snapshot.

Because the first type of data in the instance template is used to describe the data structure of the data indicated by the instance snapshot, the instance snapshot may be parsed based on the first type of data in the instance template, to restore the data indicated by the instance snapshot. Specifically, when the plurality of image files corresponding to the instance snapshot are obtained by serializing the data generated by the first instance, the plurality of image files corresponding to the instance snapshot may be deserialized based on the data structure indicated by the instance template, to restore the data actually indicated by the instance snapshot.

Step 3022: Determine, based on the size of the memory region, a first region that is in the first memory and that is used to store the data.

In addition, the third type of data in the instance template indicates the size of the memory region that needs to be occupied by the data generated by the first instance. Therefore, the first region used to store the data generated by the first instance may be determined in the first memory based on the size of the memory region. A size of the first region is consistent with the size of the memory region indicated by the instance template, that is, the first region is greater than or equal to the size of the memory region indicated by the instance template.

In addition, in a procedure of determining the first region in the first memory, three parts of content in the foregoing second type of data may be further combined: the quantity of memory pages on which the memory copy operation can be performed in the first instance based on the copy-on-write manner, the memory page cache size of the first instance, and whether the memory page of the first instance is lazy loaded, to determine the first region in which the data can be effectively stored.

The first region determined in the first memory may be a continuous memory region, to ensure that the data required for running of the second instance can be stored in the continuous memory region, thereby avoiding impact of memory contamination on normal running of the second instance.

Step 3023: Store, in the first region in the first memory, the data indicated by the instance snapshot.

It can be learned from the foregoing description of the instance template that, the third type of data in the instance template indicates which data indicated by the instance snapshot needs to be stored in the first memory, so that the data indicated by the instance snapshot may be stored in the first region in the first memory based on an indication of the instance template. In this way, all the data required for running of the second instance is filled in the first memory, and it is ensured that running of the second instance can be normally resumed subsequently.

In addition, it should be noted that, to ensure that running of the second instance can be smoothly resumed, external data on which running of the second instance depends also needs to have a same running environment as that of the first instance on a current electronic device. For example, on the current electronic device, a file name and a file path of a file required for running the second instance need to be consistent with a file name and a file path of a file required for running the first instance. Simply speaking, a running environment of the second instance needs to be consistent with the running environment of the first instance, so that after the data indicated by the instance snapshot is restored in the memory of the electronic device that currently runs the second instance, running of the second instance can be smoothly resumed.

In the foregoing step 303, in a procedure of resuming, based on the data stored in the first memory, running of the second instance, based on the running status indicated by the instance template, an instruction in a first address of the first memory may be jumped to and run. The instruction in the first address belongs to the data stored in the first memory, and the instruction in the first address corresponds to an instruction executed by the first instance in the running status. In this way, when the instruction in the first address of the first memory is run, a running status of the second instance is the same as the running status of the first instance at the creation time point of the instance snapshot. For example, during actual application, a "jump" instruction of an assembler is called based on an address space pointer that is of the first instance and that is indicated by a second type of data in the instance template, to jump to the status of the first instance at the creation time point of the instance snapshot, to resume running of the second instance.

In this solution, the running status of the first instance at the creation time point of the instance snapshot is indicated by the instance template, so that after data required for instance running is restored to the first memory, a corresponding instance running status can be jumped back to, to resume running of the second instance. In this way, a complex procedure (for example, the service initialization phase described above) that needs to be performed during initial startup of the instance does not need to be performed, thereby effectively improving the instance startup speed.

The following describes a procedure in which the electronic device continues to start another instance of a same type based on the data stored in the first memory.

Specifically, after the electronic device resumes, based on the data stored in the first memory, running of the second instance, the electronic device may continue to resume running of a new instance in a same pod or another pod by sharing the data stored in the first memory, to start a plurality of instances based on a same part of data shared in the first memory. For example, when the second instance is a process, a plurality processes of a same type are resumed by sharing a physical memory page (that is, sharing the first region used to store data in the first memory) by using parent and child processes, and a new memory resource does not need to be restored from the beginning.

In general, in this solution, when the plurality of instances of the same type are started on the same electronic device, the instances can be quickly started by using instance data shared in the shared memory, to avoid performing a procedure of storing the data indicated by the instance snapshot in the memory again. This improves the instance startup speed.

Optionally, for most instances, in a normal running procedure, these instances usually further need to be connected to a BaaS, to obtain a data service provided by the BaaS, to ensure normal running of the instances. Therefore, a startup procedure of most instances further includes a procedure of establishing a connection to the BaaS, for example, establishing a transmission control protocol (Transmission Control Protocol, TCP) connection. Generally, in a procedure of establishing the TCP connection to the BaaS, the instance usually needs to use a three-way handshake protocol to establish the connection. A speed of establishing the connection is low, and consequently, an instance startup delay is further prolonged.

Based on this, in this embodiment, a proxy component is pre-established to maintain the connection to the BaaS, so that the instance can directly access the BaaS through the proxy component. This avoids that the instance further needs to establish the connection to the BaaS in the startup procedure, thereby saving a connection establishment delay and improving the instance startup speed.

For example, after the second instance is started, the second instance may access the BaaS through the proxy component, to obtain the data service provided by the BaaS. The BaaS is used to provide the data service for running of the second instance, for example, services such as cloud data/file storage, account management, message push, and social media integration. A type of the service provided by the BaaS is not limited herein. In addition, the proxy component is pre-established, and the proxy component is used to continuously maintain the connection to the BaaS, to act as a proxy for an access behavior of the second instance for the BaaS at any time.

In other words, the second instance is used to access the BaaS through the proxy component, and the BaaS is used to provide a data service for running of the second instance. In addition, in a procedure of resuming running of the second instance, the proxy component maintains the connection to the BaaS.

Optionally, before running of the second instance is resumed, the connection between the proxy component and the BaaS may be obtained in advance. After running of the second instance is resumed, the connection between the proxy component and the BaaS is returned to the second instance, so that the second instance accesses the BaaS by accessing the proxy component. In addition, because the proxy component always maintains the connection to the BaaS, and the proxy component can act as the proxy for the access behavior between the second instance and the BaaS, when the second instance accesses the proxy component through RPC, the proxy component can act as an intermediary to convey the access behavior of the second instance to the BaaS, and the second instance returns the data service provided by the BaaS. In other words, the proxy component implements proxying the access behavior of the second instance for the BaaS by maintaining the connection to the BaaS. For the second instance, the second instance does not sense a proxy behavior of the proxy component, and the second instance is equivalent to being able to directly obtain the data service provided by the BaaS.

In this solution, the pre-established proxy component is used to maintain the connection to the BaaS, and the proxy component is used to act as the proxy for the access behavior of the instance for the BaaS, so that the instance does not need to re-establish the connection to the BaaS in the startup procedure. This reduces time consumed for establishing the connection and improves the instance startup speed.

The foregoing describes an execution procedure of the instance startup acceleration method provided in embodiments of this application. For ease of understanding, the following describes in detail a specific procedure of starting an instance based on the method provided this in embodiment with reference to a specific example.

Specifically, the following uses a to-be-started instance as a process to describe in detail a procedure of accelerating starting a process.

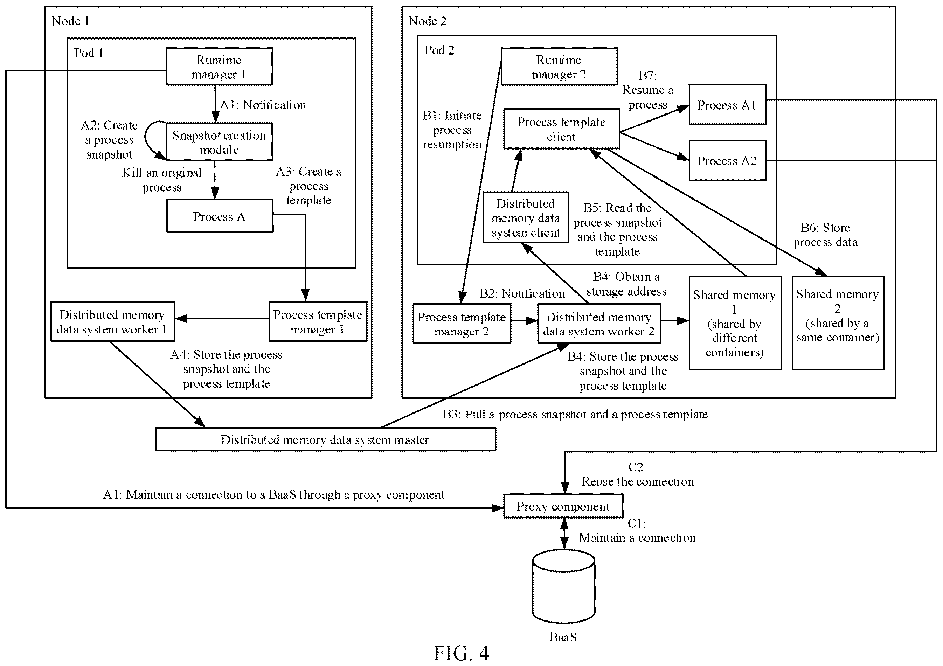

FIG. 4 is a schematic flowchart of accelerating starting a process based on a process snapshot according to an embodiment of this application. As shown in FIG. 4, a node 1 includes a runtime manager (Runtime Manager) 1, a snapshot creation module, a process template manager 1, and a distributed memory data system worker (Worker) 1. A node 2 includes a runtime manager 2, a process template client (Client), a distributed memory data system client, a distributed memory data system worker 2, a process template manager 2, a shared memory 1, a shared memory 2, and a proxy component. In addition, in addition to the node 1 and the node 2, a distributed memory data system master (Master) and a BaaS are further included.

The runtime manager is deployed in a container, and is responsible for preparing a running environment of an application process and managing a user process. The snapshot creation module is deployed in the container, and is responsible for creating and restoring an application snapshot. The distributed memory data system worker is deployed on a node, and is responsible for managing a shared memory on the node. The distributed memory data system client is deployed in the container, and is responsible for read/write interaction between the pod and the shared memory on the node. The distributed memory data system master is responsible for managing global data, that is, managing data on all nodes. The process template manager is deployed on the node, and is responsible for interacting with the snapshot creation module to create a process template. The process template client is deployed in the container, and is responsible for creating a process in the container based on the process template and a process snapshot. The proxy component is independently deployed on the node and is responsible for proxying a BaaS connection.

Specifically, in FIG. 4, a procedure in which the node 2 accelerates, based on the process snapshot and the process template that are created by the node 1, starting the process includes the following steps A1 to A4, B1 to B7, and C1 and C2. In steps A1 to A4, the process snapshot and the process template are created for a created process A; in steps B1 to B7, a process is resumed across nodes based on the process snapshot and the process instance; and in steps C1 to C3, a connection to a backend service is reused by using a proxy component.

Step A1: The runtime manager 1 in the pod 1 of the node 1 notifies the snapshot creation module 1 to create the process snapshot. In addition, the connection to the BaaS is maintained by using the proxy component, so that the process can access the BaaS by accessing the proxy component.

Specifically, the process A may be pre-created in the pod 1. In a procedure of creating the process A, procedures such as execution environment initialization (for example, Java virtual machine initialization), framework initialization, and service initialization usually need to be completed.

After a user sends a cold start instruction to the runtime manager 1, the runtime manager 1 initiates a procedure of creating the process snapshot and the process template, that is, notifies the snapshot creation module 1 to create the process snapshot.

In this solution, a service bridge manager component may be used to manage one or more proxy components. Each proxy component may establish a connection to a different BaaS, and the proxy component maintains the connection to the BaaS. In this way, when the process needs to access the BaaS, the service bridge manager component may return the connection between the proxy component and the BaaS to the process, so that the process can access the BaaS through the proxy component, and the process does not need to establish a connection to the BaaS.

Step A2: The snapshot creation module of the node 1 creates the process snapshot based on the started process A.

In a case in which the process A is started, the snapshot creation module may kill (kill) the process A, and create the process snapshot based on all data generated by the process A during startup and running, that is, the process snapshot includes all data content of the process A in an instantaneous state during running. The process snapshot in this embodiment corresponds to the instance snapshot described in the foregoing embodiment.

The process snapshot may include a plurality of image files, and each image file corresponds to a part of specific information that describes the process A. For details, refer to the foregoing description.

Step A3: The process template manager 1 deployed on the node 1 creates the process template based on the process snapshot of the process A.

The process template corresponds to the instance template described in the foregoing embodiment.

Step A4: The distributed memory data system client deployed on the node 1 synchronizes the process snapshot and the process template of the process A to the distributed memory data system master by using the distributed memory data system worker, and the distributed memory data system master synchronizes the process snapshot and the process template to distributed memory data system workers on some nodes.

Simply speaking, in this embodiment, transmission and sharing of the process snapshot and the process template on each node are implemented by using the distributed memory data system master and the distributed memory data system worker on each node.

Step B1: The runtime manager 2 deployed on the pod 2 of the node 2 delivers, to the process template manager 2, an instruction for resuming the process A across nodes.

Step B2: The process template manager 2 on the node 2 searches the distributed memory data system worker 2 of the node 2 for the process snapshot and the process template that correspond to the process A.

Step B3: If the process template manager 2 does not find the process snapshot and the process template that correspond to the process A on the distributed memory data system worker 2 of the node 2, the process template manager 2 pulls the process snapshot and the process template that correspond to the process A from the distributed memory data system master by using the distributed memory data system worker 2.

Step B4: The distributed memory data system worker 2 of the node 2 maps, on the shared memory 1, a region used to store the process snapshot and the process template, and stores the region used to store the process snapshot and the process template in the shared memory 1; and the distributed memory data system client in the pod 2 of the node 2 reads, from the distributed memory data system worker 2, start addresses of the process snapshot and the process template in the shared memory 1.

For example, the distributed memory data system worker 2 may map the region on the shared memory 1 by using a function mmap(). The distributed memory data system client in the pod 2 of the node 2 may read, from the distributed memory data system worker 2 by using an inter-process communication mechanism (for example, a UNIX domain socket), the start addresses of the process snapshot and the process template in the shared memory 1.

The shared memory 1 may implement memory copy in a copy-on-write manner, to replace network transmission. This accelerates read/write efficiency of the process snapshot and the process template.

Step B5: The process template manager 2 in the node 2 notifies the process template client in the pod 2, so that the process template client reads, by using the distributed memory data system client, the process snapshot and the process template that correspond to the process A from the shared memory 1 in the copy-on-write manner.

The shared memory 1 may be a memory shared by a plurality of different containers. Therefore, when different containers need to resume processes of a same type, corresponding process snapshots and process templates may be read from the shared memory 1 in the copy-on-write manner, thereby improving efficiency of reading the process snapshots and the process templates between different containers.

Step B6: The process template client in the pod 2 of the node 2 restores, based on an indication of a first type of data in the process template, data in the process snapshot in a deserialization manner, to obtain data generated during running of the process A; and the process template client finds, in the shared memory 2 based on memory page size information and memory mapping information in a third type of data in the process template, a memory region (namely, the first region in the foregoing embodiment) used to store the data restored in the process snapshot, and stores the data restored in the process snapshot in the found memory region, so that data required for resuming the process is stored in the shared memory 2.

It should be noted that the shared memory 2 may be memory shared by same or different pods in a same container. Therefore, when a plurality of processes of a same type need to be resumed in the same container, the plurality of processes may be resumed based on process data stored in the shared memory 2, and data required for resuming the processes does not need to be stored in the memory again (that is, step B6 does not need to be performed).

Step B7: The process template manager 2 calls, based on an address space pointer in a second type of data in the process template, a "jump" instruction of an assembler to return to a status of the original process A at a creation time point of the process snapshot, and completes resuming a process A1.

In addition, when the pod 2 needs to resume a plurality of processes of a same type, the process template client may resume running of the process A1 and a process A2 based on the data stored in the shared memory 2.

Step C1: The proxy component in the node 2 establishes a connection to the BaaS in advance, and the proxy component maintains the connection to the BaaS.

Step C2: After the process A1 and the process A2 are started, a new connection does not need to be established, but the BaaS is accessed through the proxy component.

Specifically, after the process A1 and the process A2 are started, the service bridge manager component may return the connection between the proxy component and the BaaS to the process A1 and the process A2, so that the process A1 and the process A2 reuse the connection between the proxy component and the BaaS, that is, implement access to the BaaS by accessing the proxy component.

In this way, the process A1 and the process A2 do not need to re-establish a new connection to the BaaS, but the proxy component is responsible for proxying interaction between the process A1 and the process A2, and the BaaS. Specifically, the process 2 may access the proxy component in an RPC manner, and the proxy component is responsible for proxying access behaviors of the proxy process A1 and the process A2 for the BaaS.

The foregoing describes, with reference to a specific example, a procedure in which the node 2 accelerates, based on the process snapshot created on the node 1, starting the process. The following describes a procedure in which a plurality of processes are quickly started on a same node based on a same process snapshot.

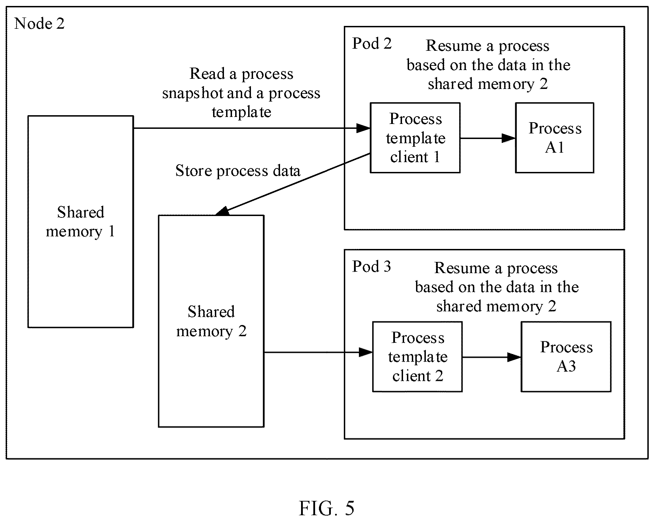

FIG. 5 is a diagram of a procedure of creating a plurality of processes on the node 2 according to an embodiment of this application. As shown in FIG. 5, in the node 2, the process template client 1 in the pod 2 reads, from the shared memory 1, the process snapshot and the process template that correspond to the process A, and stores, based on the indication of the process template, the data (process data for short) restored based on the process snapshot in the shared memory 2 in a specified manner. In this way, the process template client 1 may resume the process A1 based on the process data stored in the shared memory 2.

For a pod 3 in the node 2, the pod 3 and the pod 2 are located in a same container, and can share the data in the shared memory 2. Therefore, after the pod 2 stores the process data corresponding to the process A in the shared memory 2, a process template client 2 in the pod 3 may resume running of the process A3 based on the process data stored in the shared memory 2, without performing the step of restoring the process data in the shared memory based on the process snapshot and the process template. This improves a speed of starting the plurality of processes of the same type on the same node.

In conclusion, for different pods on the same node, the process data stored in the shared memory 2 may be obtained, and running of a corresponding process is further resumed in the pod based on the process data, thereby accelerating process startup. Similarly, in a same pod, running of the plurality of processes of the same type may also be resumed based on the process data stored in the shared memory 2, thereby improving the process startup speed.

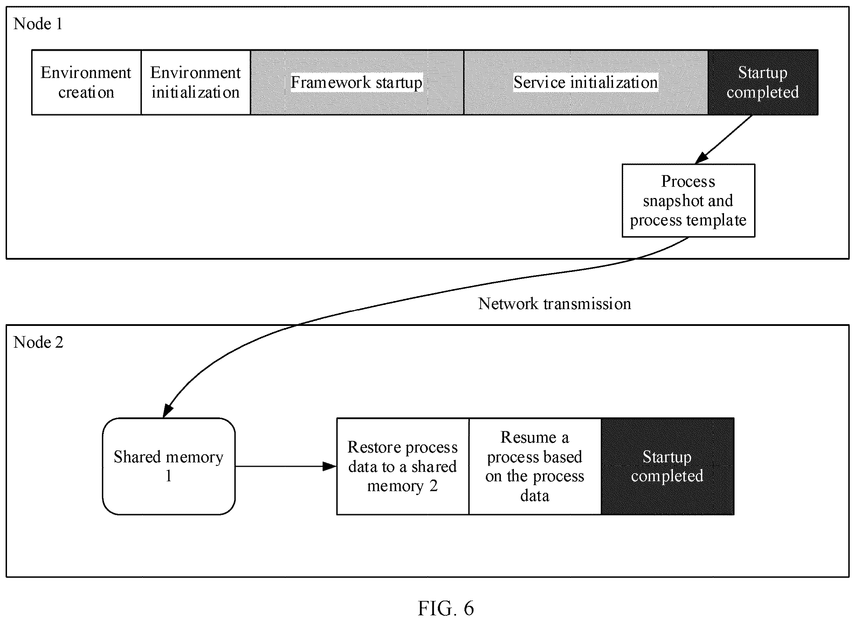

FIG. 6 is a diagram of comparison between procedures of starting processes on different nodes according to an embodiment of this application. As shown in FIG. 6, on the node 1, an original process startup procedure is followed to start a process, and a corresponding process snapshot and a corresponding process template are generated based on the started process. Specifically, a procedure of starting the process by the node 1 includes four steps: running environment creation, running environment initialization, framework startup, and service initialization. The framework startup and the service initialization need to consume a long delay.

After the node 1 generates the process snapshot, a node 2 may obtain the process snapshot and the process template from the node 1, and store the process snapshot in a shared memory 1 of the node 2. In this way, in an actual procedure of starting a process by the node 2, the node only needs to perform the following two steps: restoring process data to a shared memory 2 based on the process snapshot and the process template, and resuming running of the process based on the process data in the shared memory 2.

It can be learned from FIG. 6 that, compared with the node 1, the node 2 does not need to perform procedures such as framework startup and service initialization, thereby effectively reducing a process startup delay.

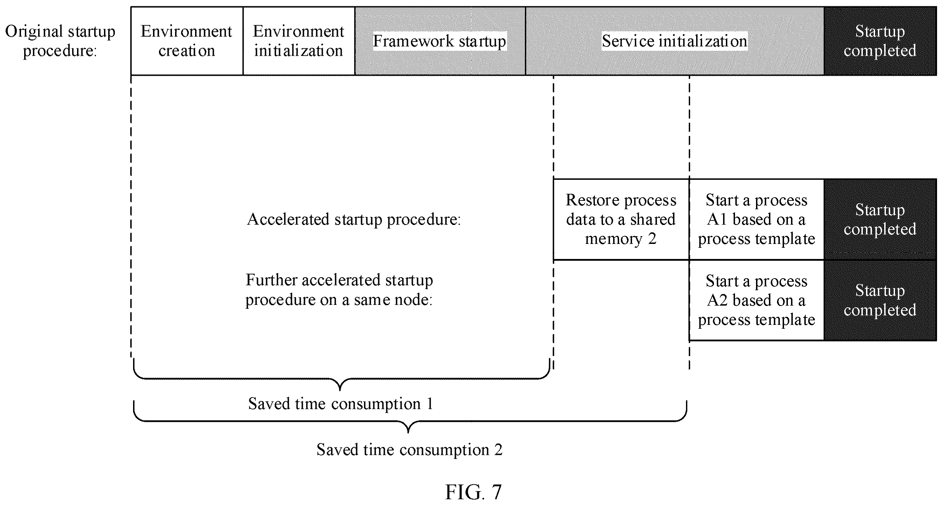

FIG. 7 is a diagram of comparison between procedures of starting processes in different manners according to an embodiment of this application. As shown in FIG. 7, an original startup procedure of a process includes four steps: running environment creation, running environment initialization, framework startup, and service initialization. The framework startup and the service initialization need to consume a long delay.

After a process snapshot is transferred between nodes to implement process startup acceleration, a process startup procedure includes only two steps: creating a process template based on the process snapshot and starting a process based on the process template.

In addition, in a case in which more processes are started on a same node, because process data has been restored to a shared memory 2, further accelerated startup of the processes can be implemented on the same node. Specifically, after process startup is further accelerated on the same node, the step of starting the process includes only the step of starting the process based on the process data.

It can be learned from the comparison in FIG. 7 that, based on the startup acceleration method provided in this solution, two time-consuming steps of framework startup and service initialization can be effectively avoided. Instead, the process is started by restoring the process data to the shared memory based on the process template and the process snapshot, thereby effectively reducing a startup delay of the process.

The foregoing embodiment describes the instance startup acceleration method provided in embodiments of this application. The following describes a device that performs the instance startup acceleration method.

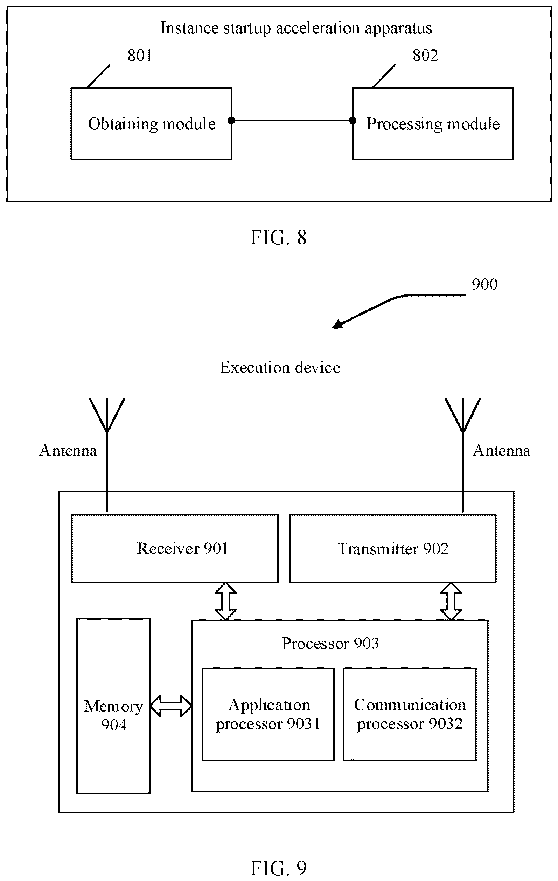

FIG. 8 is a diagram of a structure of an instance startup acceleration apparatus according to an embodiment of this application. As shown in FIG. 8, the instance startup acceleration apparatus includes: an obtaining module 801, configured to obtain an instance snapshot and an instance template, where the instance snapshot is obtained based on a started first instance, the instance snapshot indicates data generated by the first instance during running, and the instance template indicates a storage manner of the data in a memory during startup of the first instance; a processing module 802, configured to store, in a first memory based on the instance template, the data indicated by the instance snapshot; and the processing module 802 is further configured to resume running of a second instance based on the data stored in the first memory.

In a possible implementation, the first memory is a shared memory, and the data stored in the first memory is used to resume one or more instances of a same type.

In a possible implementation, the instance template further indicates a running status of the first instance at a creation time point of the instance snapshot. The processing module 802 is further configured to: based on the running status indicated by the instance template, jump to an instruction in a first address of the first memory and run the instruction, where when the instruction is run, a running status of the second instance is the same as the running status of the first instance at the creation time point of the instance snapshot.

In a possible implementation, the instance template specifically indicates a size of a memory region occupied by data indicated by the instance snapshot; and the processing module 802 is further configured to determine, based on the size of the memory region, a first region that is in the first memory and that is used to store data; and store, in the first region in the first memory, the data indicated by the instance snapshot.

In a possible implementation, the instance template specifically further indicates a data structure of the data indicated by the instance snapshot. The processing module 802 is further configured to parse the instance snapshot based on the data structure indicated by the instance template, to obtain the data indicated by the instance snapshot.

In a possible implementation, the instance template specifically indicates one or more of the following: the running status of the first instance at the creation time point of the instance snapshot, the size of the memory region occupied by the data indicated by the instance snapshot, and the data structure of the data indicated by the instance snapshot.

In a possible implementation, the second instance is used to access a backend as a service BaaS through a proxy component, and the BaaS is used to provide a data service for running of the second instance. In a procedure of resuming running of the second instance, the proxy component maintains a connection to the BaaS.

In a possible implementation, the obtaining module is further configured to obtain the connection between the proxy component and the BaaS; and the processing module is further configured to: after running of the second instance is resumed, return the connection to the second instance.

In a possible implementation, the instance snapshot and the instance template are obtained from a running node of the first instance through a network.

In a possible implementation, the first instance and the second instance are processes, threads, or hyper-threads.

In a possible implementation, the first instance and the second instance are instances in a microservice architecture.

The following describes an execution device provided in embodiments of this application. FIG. 9 is a diagram of a structure of an execution device according to an embodiment of this application. The execution device 900 may be specifically represented as a mobile phone, a tablet, a notebook computer, an intelligent wearable device, a server, or the like. This is not limited herein. Specifically, the execution device 900 includes: a receiver 901, a transmitter 902, a processor 903, and a memory 904 (there may be one or more processors 903 in the execution device 900, and one processor is used as an example in FIG. 9). The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores a processor and operation instructions, an executable module or a data structure, a subset thereof, or an extended set thereof. The operation instructions may include various operation instructions for implementing various operations.

The processor 903 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 903, or may be implemented by the processor 903. The processor 903 may be an integrated circuit chip and has a signal processing capability. During implementation, the steps in the foregoing methods may be implemented by using a hardware integrated logic circuit in the processor 903 or by using instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 903 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 904, and the processor 903 reads information in the memory 904, and completes the steps in the foregoing methods in combination with hardware of the processor 903.

The receiver 901 may be configured to receive input digit or character information, and generate a signal input related to setting and function control of the execution device. The transmitter 902 may be configured to output digital or character information through a first interface. The transmitter 902 may be further configured to send instructions to a disk group through the first interface, to modify data in the disk group. The transmitter 902 may further include a display device like a display.

In this embodiment of this application, in a case, the processor 903 is configured to perform the method in the embodiment corresponding to FIG. 3.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the rendering method described in the foregoing embodiments. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

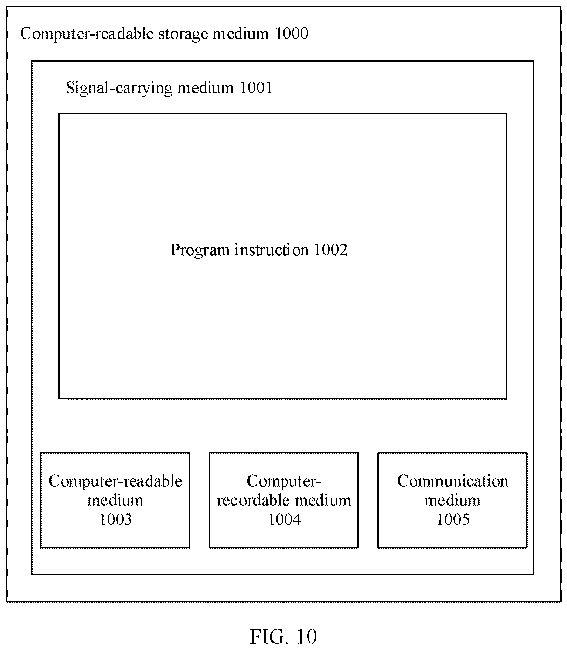

FIG. 10 is a diagram of a structure of a computer-readable storage medium according to an embodiment of this application. This application further provides a computer-readable storage medium. In some embodiments, the method disclosed in FIG. 3 may be implemented as computer program instructions encoded in a machine-readable format on the computer-readable storage medium or encoded in another non-transitory medium or product.

FIG. 10 schematically shows a conceptual partial view of an example computer-readable storage medium arranged according to at least some embodiments shown herein, and the example computer-readable storage medium includes a computer program for executing a computer process on a computing device.

In an embodiment, a computer-readable storage medium 1000 is provided by using a signal-carrying medium 1001. The signal-carrying medium 1001 may include one or more program instructions 1002, and when the one or more program instructions 1002 are run by one or more processors, the foregoing functions or some functions described for FIG. 3 may be provided. In addition, the program instruction 1002 in FIG. 10 is also described as an example instruction.

In some examples, the signal-carrying medium 1001 may include a computer-readable medium 1003, for example, but not limited to, a hard disk drive, a compact disc (CD), a digital video disc (DVD), a digital tape, a memory, a ROM, or a RAM.

In some implementations, the signal-carrying medium 1001 may include a computer-recordable medium 1004, for example, but not limited to, a memory, a read/write (R/W) CD, an R/W DVD, or the like. In some implementations, the signal-carrying medium 1001 may include a communication medium 1005, for example, but is not limited to a digital and/or analog communication medium (for example, an optical fiber cable, a waveguide, a wired communication link, or a wireless communication link). Therefore, for example, the signal-carrying medium 1001 may be conveyed by a wireless-form communication medium 1005 (for example, a wireless communication medium that complies with the IEEE 802 standard or another transmission protocol).

The one or more program instructions 1002 may be, for example, computer-executable instructions or logic implementation instructions. In some examples, a computing device may be configured to provide various operations, functions, or actions in response to the program instruction 1002 transmitted to the computing device by using one or more of the computer-readable medium 1003, the computer-recordable medium 1004, and/or the communication medium 1005.

All or some of the foregoing embodiments may be implemented by software, hardware, firmware, or any combination thereof. When software is used to implement the methods, all or some of embodiments may be implemented in a form of computer program product.

The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It may be clearly understood by a person skilled in the art that, for the purpose of convenient and brief description, for a detailed working procedure of the foregoing system, apparatus, and unit, refer to a corresponding procedure in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application.

## Claims

1. An instance startup acceleration method, comprising:
obtaining an instance snapshot and an instance template, wherein the instance snapshot is obtained based on a started first instance, the instance snapshot indicates data generated by the first instance during running, and the instance template indicates a storage manner of the data in a memory during startup of the first instance;
storing, in a first memory based on the instance template, the data indicated by the instance snapshot; and
resuming running of a second instance based on the data stored in the first memory.

2. The method according to claim 1, wherein the first memory is a shared memory, and the data stored in the first memory is used to resume one or more instances of a same type.

3. The method according to claim 1 or 2, wherein the instance template specifically indicates a size of a memory region occupied by the data indicated by the instance snapshot; and
storing, in the first memory based on the instance template, the data indicated by the instance snapshot comprises:
determining, based on the size of the memory region, a first region that is in the first memory and that is used to store the data; and
storing, in the first region in the first memory, the data indicated by the instance snapshot.

4. The method according to claim 3, wherein the instance template specifically further indicates a data structure of the data indicated by the instance snapshot; and
storing, in the first memory based on the instance template, the data indicated by the instance snapshot further comprises:
parsing the instance snapshot based on the data structure indicated by the instance template, to obtain the data indicated by the instance snapshot.

5. The method according to any one of claims 1 to 4, wherein the instance template further indicates a running status of the first instance at a creation time point of the instance snapshot; and
resuming running of the second instance based on the data stored in the first memory comprises:
based on the running status indicated by the instance template, jumping to an instruction in a first address of the first memory and running the instruction, wherein when the instruction is run, a running status of the second instance is the same as the running status of the first instance at the creation time point of the instance snapshot.

6. The method according to any one of claims 1 to 5, wherein the instance template specifically indicates one or more of the following:
the running status of the first instance at the creation time point of the instance snapshot, the size of the memory region occupied by the data indicated by the instance snapshot, and the data structure of the data indicated by the instance snapshot.

7. The method according to any one of claims 1 to 6, wherein the second instance is used to access a backend as a service BaaS through a proxy component, and the BaaS is used to provide a data service for running of the second instance; and
in a procedure of resuming running of the second instance, the proxy component maintains a connection to the BaaS.

8. The method according to claim 7, wherein the method further comprises:
obtaining the connection between the proxy component and the BaaS; and
after running of the second instance is resumed, returning the connection to the second instance.

9. The method according to any one of claims 1 to 8, wherein the instance snapshot and the instance template are obtained from a running node of the first instance through a network.

10. The method according to any one of claims 1 to 9, wherein the first instance and the second instance are processes, threads, or hyper-threads.

11. The method according to any one of claims 1 to 10, wherein the first instance and the second instance are instances in a microservice architecture.

12. An instance startup acceleration apparatus, comprising:
an obtaining module, configured to obtain an instance snapshot and an instance template, wherein the instance snapshot is obtained based on a started first instance, the instance snapshot indicates data generated by the first instance during running, and the instance template indicates a storage manner of the data in a memory during startup of the first instance;
a processing module, configured to store, in a first memory based on the instance template, the data indicated by the instance snapshot; and
the processing module, further configured to resume running of a second instance based on the data stored in the first memory.

13. The apparatus according to claim 12, wherein the first memory is a shared memory, and the data stored in the first memory is used to resume one or more instances of a same type.

14. The apparatus according to claim 12 or 13, wherein the instance template specifically indicates a size of a memory region occupied by the data indicated by the instance snapshot; and
the processing module is further configured to:
determine, based on the size of the memory region, a first region that is in the first memory and that is used to store the data; and
store, in the first region in the first memory, the data indicated by the instance snapshot.

15. The apparatus according to claim 14, wherein the instance template specifically further indicates a data structure of the data indicated by the instance snapshot; and
the processing module is further configured to:
parse the instance snapshot based on the data structure indicated by the instance template, to obtain the data indicated by the instance snapshot.

16. The apparatus according to any one of claims 12 to 15, wherein the instance template further indicates a running status of the first instance at a creation time point of the instance snapshot; and
the processing module is further configured to:
based on the running status indicated by the instance template, jump to an instruction in a first address of the first memory and run the instruction, wherein when the instruction is run, a running status of the second instance is the same as the running status of the first instance at the creation time point of the instance snapshot.

17. The apparatus according to any one of claims 12 to 16, wherein the instance template specifically indicates one or more of the following:
the running status of the first instance at the creation time point of the instance snapshot, the size of the memory region occupied by the data indicated by the instance snapshot, and the data structure of the data indicated by the instance snapshot.

18. The apparatus according to any one of claims 12 to 17, wherein the second instance is used to access a backend as a service BaaS through a proxy component, and the BaaS is used to provide a data service for running of the second instance; and
in a procedure of resuming running of the second instance, the proxy component maintains a connection to the BaaS.

19. The apparatus according to claim 18, wherein
the obtaining module is further configured to obtain the connection between the proxy component and the BaaS; and
the processing module is further configured to: after running of the second instance is resumed, return the connection to the second instance.

20. The apparatus according to any one of claims 12 to 19, wherein the instance snapshot and the instance template are obtained from a running node of the first instance through a network.

21. The apparatus according to any one of claims 12 to 20, wherein the first instance and the second instance are processes, threads, or hyper-threads.

22. The apparatus according to any one of claims 12 to 21, wherein the first instance and the second instance are instances in a microservice architecture.

23. An instance startup acceleration apparatus, comprising a memory and a processor, wherein the memory stores code, the processor is configured to execute the code, and when the code is executed, the apparatus performs the method according to any one of claims 1 to 11.

24. A computer storage medium, wherein the computer storage medium stores instructions, and when the instructions are executed by a computer, the computer is enabled to perform the method according to any one of claims 1 to 11.

25. A computer program product, wherein the computer program product stores instructions, and when the instructions are executed by a computer, the computer is enabled to perform the method according to any one of claims 1 to 11.
